# EUROPÄISCHE PATENTSCHRIFT

(11) **EP 2 098 743 B1**
(45) Veröffentlichungstag und Bekanntmachung des Hinweises auf die Patenterteilung: **18.04.2012**
(21) Anmeldenummer: 09153850.4
(22) Anmeldetag: 27.02.2009
(51) Int. Cl.: F16D 23/12, F16D 27/00, F16D 21/00

(54) **Stellmechanismus zum Ein- und Ausrücken einer Trennkupplung mit drehbarem Kurvensegment**
Adjustment mechanism for inserting and extracting a separation coupling with rotating curve segment
Mécanisme de réglage destiné à l'insertion et l'extraction d'un embrayage de coupure à l'aide d'un segment de came rotatif

(30) Priorität: 06.03.2008 DE 102008013054
(43) Veröffentlichungstag der Anmeldung: 09.09.2009
(73) Patentinhaber: GETRAG Getriebe- und Zahnradfabrik Hermann Hagenmeyer GmbH & Cie KG, 74199 Untergruppenbach (DE)
(72) Erfinder: Hasenkamp, Jan, 74223 Flein (DE); Fronius, Kuno, 74348 Lauffen (DE)
(74) Vertreter: Witte, Weller & Partner

(56) Entgegenhaltungen:
- DE-A1-102006 008 226
- DE-A1-102006 015 885
- DE-C1- 19 947 763

## Beschreibung

Die vorliegende Erfindung betrifft einen Stellmechanismus zum Ein- und Ausrücken einer Trennkupplung eines Einfach- oder Mehrfachkupplungsgetriebes, welches ein Gehäuse aufweist, für ein Kraftfahrzeug. Der Stellmechanismus wird vorzugsweise elektromechanisch angetrieben. Die zum Halten der Kupplung im eingerückten Zustand erforderliche Haltekraft wird von einem Motor des Stellmechanismus durch permanente Energiebeaufschlagung geliefert.

Es sind verschiedene Konzepte zum Ein- und Ausrücken von Trennkupplungen mittels Aktuatorik bekannt.

Ein erstes Konzept, welches auf Drehschiebern basiert, ist in der WO 2007/096212 A1 offenbart. Problematisch bei dieser Lösung ist ein großer Hysterese-Effekt bzw. Reibung, die durch eine außermittige Krafteinleitung und hohe Kraftanteile, die quer zu einer Einrücklagerwirkrichtung wirken, verursacht werden.

Ein weiteres Problem ist z.B. darin zu sehen, dass herkömmliche Stellantriebe deutlich aus einem Getriebegehäuse hervorragen, so dass der Einsatz bei Inline-Anwendungen und Front-Quer-Getrieben erschwert ist.

Ein weiteres Konzept wird in dem Artikel "Elektromotorische Aktuatorik für Doppelkupplungsgetriebe - Bester Wirkungsgrad aus eigenem Antrieb" (LuK KOLLOQUIUM 2006, Seiten 136 bis 143) beschrieben. Dort ist ein radial von einer Getriebeeingangswelle weg bauender Aktuator gezeigt, der mittels einer Kugelumlaufmutter einen Einrückhebel der Kupplung drückt, um diese zu schließen. Der Einrückhebel verläuft dabei in einer schiefen Ebene. Um eine Selbstöffnung der Kupplung zu ermöglichen, ist die Kupplung in Ausrückrichtung vorgespannt. Ein Elektromotor muss ständig bestromt werden, wenn die Kupplung geschlossen halten werden soll. Auch ragen die Stellantriebe der Betätigungseinheiten deutlich aus dem Getriebegehäuse hervor, was insbesondere bei Inline-Anwendungen hinsichtlich des zur Verfügung stehenden Bauraums kritisch ist.

Eine weitere Doppelkupplungsaktuatorik wird in dem Dokument DE 10 2007 003 338 A1 beschrieben. Die dort gezeigte Aktuatorik hat ebenfalls einen großen Bauraumbedarf, so dass die Integration räumlich schwierig ist. Ein gattungsgemäßes Stellmechanismus ist aus DE-C-199 47 763 bekannt.

Es ist daher eine Aufgabe der vorliegenden Erfindung, einen universell für Einfachkupplungen und Doppelkupplungen einsetzbaren Stellmechanismus vorzusehen, dessen Bauraumbedarf äußerst gering ist. Insbesondere sollen geringe Reibungswerte vorgesehen werden. Vorzugsweise soll der Stellmechanismus einen geringen Strombzw. Energiebedarf aufweisen. Ferner wäre es wünschenswert, möglichst wenige Komponenten einzusetzen, so dass sich die Aktuatorik allgemein einfacher gestalten lässt.

Diese Aufgabe wird mit einem Stellmechanismus zum Ein- und Ausrücken einer Trennkupplung eines Einfach- oder Doppelkupplungsgetriebes, welches ein Gehäuse aufweist und zum Einsatz in Kraftfahrzeug geeignet ist, gelöst, wobei der Stellmechanismus aufweist: einen Stellantrieb; ein Kurvensegment; eine Einrückgabel; und einen mit der Einrückgabel verbundenen Kurvenfolger. Das Kurvensegment weist eine kurvenförmige Ausnehmung auf. Es ist um ein erstes gehäusefestes Lager drehbar und kann vom Stellantrieb in einer Einrückdrehrichtung oder einer Ausrückdrehrichtung gedreht werden. Die Einrückgabel ist um ein zweites gehäusefestes Lager drehbar. Auf einer Seite der Gabel erfolgt die Ankopplung derselben an das Kurvensegment über den Kurvenfolger. Auf der gegenüberliegenden Seite der Gabel erfolgt eine derartige Ankopplung an die Trennkupplung, so dass die Trennkupplung bei einer Drehung des Kurvensegments in der Einrückdrehrichtung geschlossen wird und bei einer Drehung in der Ausrückdrehrichtung geöffnet wird. Der Kurvenfolger greift in die kurvenförmige Ausnehmung ein. Der Kurvenfolger wird von einer Kontur der kurvenförmigen Ausnehmung bei einer Drehung des Kurvensegments geführt. Die Kontur ist derart geformt, dass der Kurvenfolger bei einer Betätigung des Stellantriebs in einer radialen Richtung des Kurvensegments versetzt wird.

Der Stellmechanismus der vorliegenden Erfindung hat den Vorteil, dass er einfach ausgestaltet ist. Es werden wenige Komponenten benötigt, um die Kupplung einzurücken oder auszurücken. Der Stellmechanismus lässt sich sowohl in Einfachkupplungen als auch in Doppelkupplungen, dann aber in doppelter Ausführung, einbauen. Der Stellmechanismus kann bei nassen und bei trockenen Kupplungen eingesetzt werden.

Der Stellmechanismus der vorliegenden Erfindung baut sehr klein. Der Stellantrieb kann tangential in das Getriebegehäuse integriert werden und steht somit, wenn überhaupt, nur unwesentlich in radialer Richtung bezüglich der Trennkupplungsachse aus dem Gehäuse vor. Dies ist insbesondere bei Inline-Anwendungen und Front-Quer-Getrieben von Vorteil, wo der zur Verfügung stehende Bauraum, insbesondere in radialer Richtung, äußerst knapp ist. Insbesomdere Getriebe für Inline-Anwendungen werden häufig in spärlich bemessene Getriebetunnel integriert, was mit dem Stellmechanismus gemäß der Erfindung ohne Probleme möglich ist.

Ferner ist es von Vorteil, wenn die Ausnehmung im Wesentlichen in einer Umfangsrichtung des Kurvensegments verläuft und einen sich ändernden Radius aufweist.

Durch diese Maßnahme ist gewährleistet, dass bei einer Drehung des Kurvensegments um sein Lager die Einrückgabel um ihr Lager gedreht wird, um die Kupplung einzurücken oder auszurücken.

Die Ausnehmung weist insbesondere eine Kontaktfläche auf, die der Kurvenfolger, wenn der Stellmechanismus in ein Getriebe eingebaut ist, aufgrund einer Vorspannung der Trennkupplung, die entlang einer Ausrückrichtung der Trennkupplung wirkt, berührt.

Diese Maßnahme bewirkt, dass der Kurvenfolger im Wesentlichen immer an der Kontaktflanke des Kurvensegments anliegt. Wählt man die Form der Kontaktflanke geschickt, so kann das zum Drehen des Kurvensegments benötigte Stellmoment zu bestimmten Zeitpunkten des Bewegungsablaufes, z.B. beim Erreichen der eingerückten Stellung, willkürlich beeinflusst werden, wobei sich z.B. das Stellmoment kurz vor dem Erreichen des Einrückpunktes (zusätzlich) erhöht.

Gemäß einer bevorzugten Ausführungsform weist die Kontaktflanke im Wesentlichen einen Querschnitt in Form eines Abschnittes einer, insbesondere archimedischen, Spirale auf.

Die Ableitung der mathematischen Funktion für eine Spirale in Zylinderkoordinaten nach einem Drehwinkel Phi resultiert dann in einer Konstanten. Dies bedeutet, dass die auf die Trennkupplung ausgeübte Kraft konstant ausgeübt wird. Es gibt somit einen linearen Zusammenhang zwischen dem Drehwinkel des Kurvensegments und der zum Kurvensegment radialen Translationsbewegung, welcher der Kurvenfolger annähernd folgt. Es versteht sich, dass auch andere Spiralformen, wie z.B. eine logarithmische Spirale oder Ähnliches, verwendet werden könnten, um eine Vorlage für die Form der Kontaktflanke zu geben.

Bei einer weiteren Ausgestaltung der Erfindung weist die Kontaktflanke einen kontinuierlichen Betriebsabschnitt auf, wobei der Betriebsabschnitt im Bereich seines einen Endes einen Einrückpunkt und im Bereich seines anderen Endes einen Ausrückpunkt aufweist.

Ferner ist es von Vorteil, wenn die Kontaktflanke im Bereich des Einrückpunktes eine Ausbuchtung aufweist, die vorzugsweise einen konstanten Radius (im Bezugssystem des Kurvensegments) hat.

Wenn das Kurvensegment in der Einrückdrehrichtung überdreht wird, d.h. der Einrückpunkt vom Kurvenfolger überschritten wird, kann die auf die Trennkupplung auszuübende Kraft reduziert werden, um die Trennkupplung im eingerückten Zustand zu halten. Somit wird der Energiebedarf, um die Haltekraft aufzuwenden, reduziert. Der Stellmechanismus ist generell einer geringeren Belastung ausgesetzt, was einen geringeren Verschleiß bedeutet. Insbesondere der Motor des Stellantriebs wird weniger stark als bisher beansprucht. Es wird weniger Energie verbraucht.

Gemäß einer weiteren Ausgestaltung schließt sich in der Eindrehdrehrichtung ein Flankenabschnitt mit einer Erhebung an den Betriebsabschnitt an, wobei der Flankenabschnitt mit Erhebung anschließend in einen Verriegelungsabschnitt übergeht.

Mit einer entsprechend ausgebildeten Kontaktflanke lässt sich eine Parksperrfunktion, insbesondere bei einem Doppelkupplungsgetriebe, realisieren. Der Kurvenfolger wird im Bereich des Einrückpunktes "überdrückt", indem er die Erhebung in der Flanke überwinden muss, um anschließend in einer Art zusätzlichen Ausbuchtung einzurasten. In diesem Fall werden bei einem Doppelkupplungsgetriebe zwei Gänge eingelegt, was im Ruhezustand des Getriebes möglich ist. Wird das Getriebe dann mit einem Drehmoment beaufschlagt, so verspannt sich das gesamte Getriebe. Eine Bewegung des Getriebes und des Antriebstrangs ist somit nicht möglich. Diese Funktionsweise kann ausgenützt werden, um ein Kraftfahrzeug im Ruhezustand, also insbesondere, wenn es geparkt werden soll, sicher abzustellen.

Gemäß einer weiteren Ausführungsform weist der Stellmechanismus ferner eine Kraftkompensationseinrichtung auf, die auf eine oder mehrere Komponenten des Mechanismus eine unterstützende Kraft bzw. ein unterstützendes Moment bewirkt. Insbesondere kann auf das Kurvensegment ein unterstützendes Moment eingeleitet werden, das sich im Idealfall mit zunehmender Einrückrichtung erhöht, um die zunehmende Kraft zur Kupplungsbetätigung zu kompensieren.

Durch diese Maßnahme wird die Kraft verringert, die aufgewendet werden muss, um die Kupplung einzurücken. Diese Kraft wird üblicherweise allein vom Motor des Stellantriebs geleistet. Mit einer entsprechenden Kraftkompensation verringert sich die vom Motor zu leistende Kraft. Beim Ausrücken der Kupplung muss entsprechend eine Kraft gegen die Kraftkompensationseinrichtung aufgewendet werden, die jedoch im Wesentlichen von der Kupplung, insbesondere deren Tellerfedern, selbst geleistet wird, da die Kupplung vorzugsweise in der Ausrückrichtung vorgespannt ist.

Bei einer weiteren bevorzugten Ausgestaltung weist die Kraftkompensationseinrichtung ein Federelement auf, das gegen die Ausrückdrehrichtung vorgespannt ist und das an seinem einen Ende an das Gehäuse und an seinem gegenüberliegenden Ende an das Kurvensegment oder die Gabel koppelbar ist.

Die Feder dient als Kraftspeicher, um die unterstützende Kraft beim Einrücken abrufen zu können. Beim Ausrücken wird die unterstützende Kraft erneut in der Feder gespeichert.

Ferner ist es von Vorteil, wenn eine ansteigende Erhöhung in einer Außenfläche des Kurvensegments vorgesehen ist, um eine möglichst große Kraft im Bereich des Einrückpunktes auf das Kurvensegment bei einer Drehung in die Einrückdrehrichtung auszuüben.

Die unterstützende Kraft nimmt also insbesondere im Bereich des Einrückpunktes, wo die größten Kräfte aufgewendet werden müssen, um die Kupplung einzurücken, nochmals zu und unterstützt somit den Motor des Stellantriebs, der dadurch entlastet wird.

Ferner ist es von Vorteil, wenn der Kurvenfolger eine Gabelrolle ist, die vorzugsweise zwischen zwei Zinken der Gabel drehbar fixiert ist und deren Durchmesser so gewählt ist, dass die Gabelrolle mit einem vorgegebenen Spiel entlang der Kontaktflanke in der kurvenförmigen Ausnehmung bewegt werden kann.

Auch ist es von Vorteil, wenn der Stellantrieb einen Motor, insbesondere einen Elektromotor, und eine Bremse aufweist.

Sobald die Kupplung eingerückt ist, ist üblicherweise der Motor zum Bereitstellen der erforderlichen Haltekraft verantwortlich. Wenn man nun eine Bremse vorsieht, kann die vom Motor aufzuwendende Haltekraft erheblich reduziert werden. Versuche haben gezeigt, dass zum Aufbringen der Haltekraft mit dem Motor Ströme in der Größenordnung von maximal 40 A erforderlich sind. Eine dazwischen geschaltete Bremse benötigt dagegen bei gleicher applizierter Haltekraft einen um bis zu einer Zehnerpotenz geringeren Strom, so dass sich der Energieverbrauch durch das Vorsehen der Bremse weiter erheblich reduzieren lässt.

Ein weiterer Vorteil ist darin zu sehen, wenn der Stellantrieb ferner ein Zwischengetriebe, insbesondere ein Planeten- oder Stirnradgetriebe, und einen Ritzel aufweist.

Die Verwendung eines Planetengetriebes erlaubt einen kompakten Aufbau des Stellantriebs. Dies liegt darin begründet, dass innerhalb eines geringen Bauraums große Untersetzungen realisierbar sind. Dazu trägt auch bei, dass für die internen Elemente des Zwischengetriebes (Planetengetriebe) keine zusätzlichen Lagerstellen am Getriebegehäuse vorgesehen werden müssen. Weiterhin kann der Stellantrieb als schlanke, zylindrische Einheit ausgeführt werden. Die beiden letztgenannten Gründe ermöglichen auch eine vorteilhafte, einfache Montage des Stellantriebs am Getriebegehäuse.

Die Verwendung eines Stirnradgetriebes erlaubt eine Reduzierung des axialen Bauraums, da die Untersetzungsstufen parallel angeordnet werden können. Hierdurch benötigt der Stellantrieb jedoch tendenziell mehr radialen Bauraum, d.h. er wird breiter. Steht im radialen Bereich jedoch mehr Bauraum zur Verfügung als im axialen Bereich, kann dies jedoch von Vorteil sein.

Gemäß einer weiteren bevorzugten Ausführungsform ist die Bremse parallel zum Zwischengetriebe über eine Stirnverzahnung angeordnet.

Auch hier durch kann der axiale Bauraum des Stellantriebs verringert werden, was je nach Einsatzsituation im Getriebe von Vorteil sein kann.

Außerdem ist es von Vorteil, wenn das Kurvensegment ein Kreissegment ist, dessen Kreisbogen eine Verzahnung aufweist.

Auf diese Weise lässt sich das Kurvensegment mit einer entsprechend verzahnten Spindel des Motors bzw. einem Zahnrad antreiben, das an den Motor gekoppelt ist.

Gemäß einer weiteren vorteilhaften Ausgestaltung ist das Kurvensegment mit einem Bowdenzug verbunden, der von außerhalb des Gehäuses mechanisch betätigbar ist.

Sollte es zu einem Fehler beim Stellen des Kurvensegments kommen, so dass der Stellantrieb nicht mehr in der Lage ist, diesen Fehler durch Vor- oder Zurückdrehen des Kurvensegments wieder zu beheben, so kann mittels des Bowdenzugs das Kurvensegment manuell, insbesondere in die Ausrückposition, rückgestellt werden. Dies ist insbesondere bei der Ausführungsform von Vorteil, wo das Kurvensegment eine Parksperrfunktion integriert hat. Dieses Merkmal stellt ein Sicherheitsmerkmal dar und dient zur Gewährleistung einer Entsperrung im Notfall.

Außerdem ist es von Vorteil, wenn der Stellantrieb, im eingebauten Zustand des Stellmechanismus, im Wesentlichen in einer radialen Richtung relativ zu einer Betätigungsachse der Trennkupplung angeordnet ist.

Diese Maßnahme erlaubt eine weitere Verringerung des erforderlichen Bauraums.

Ausführungsbeispiele der Erfindung sind in der Zeichnung dargestellt und werden in der nachfolgenden Beschreibung näher erläutert. Es zeigen:
- Fig. 1: zeigt eine Übersicht eines Teils eines exemplarischen Doppelkupp- lungsgetriebes, in welches ein Stellmechanismus gemäß der vorlie- genden Erfindung eingebaut ist;
- Fig. 2: zeigt die Form eines Kurvensegments gemäß der vorliegenden Erfin- dung in Zylinderkoordinaten;
- Fig. 3: zeigt eine Abwandlung des Kurvensegments der Fig. 2;
- Fig. 4: zeigt eine weitere Abwandlung der Kurvensegmente der Fig. 2 und 3;
- Fig. 5: zeigt eine Funktionsskizze für ein Doppelkupplungsgetriebe in der Parksperrfunktion;
- Fig. 6: zeigt eine Abwandlung des Stellmechanismus der Fig. 1;
- Fig. 7: zeigt eine detaillierte Darstellung des Kurvensegments der Fig. 6;
- Fig. 8: zeigt eine isometrische Ansicht eines Stellmechanismus gemäß der Erfindung, der mit einem Einrücklager eines Doppelkupplungsgetrie- bes verbunden ist;
- Fig. 9: zeigt einen vertikalen Schnitt durch die Fig. 8, wobei zusätzlich ein Getriebegehäuse dargestellt ist;
- Fig. 10: zeigt einen weiteren Schnitt durch den Stellmechanismus der Fig. 8, wobei nur ein oberer Teil des Stellmechanismus unter Berücksichti- gung eines zusätzlichen Getriebegehäuses dargestellt ist;
- Fig. 11a-c: zeigen drei erste Varianten einer Kraftkompensationseinrichtung;
- Fig. 12a und b: zeigen zwei weitere Varianten einer Kraftkompensationseinrichtung;
- Fig. 13: zeigt eine weitere Variation der Kraftkompensationseinrichtung, die an einem Kurvensegment realisiert ist; und
- Fig. 14: zeigt eine perspektivische Ansicht einer anderen Kraftkompensations- einrichtung.

In der nachfolgenden Beschreibung der Figuren werden ähnliche Elemente mit gleichen Bezugsziffern versehen werden. Wenn es Unterschiede oder Abwandlungen gibt, wird dies erläutert werden.

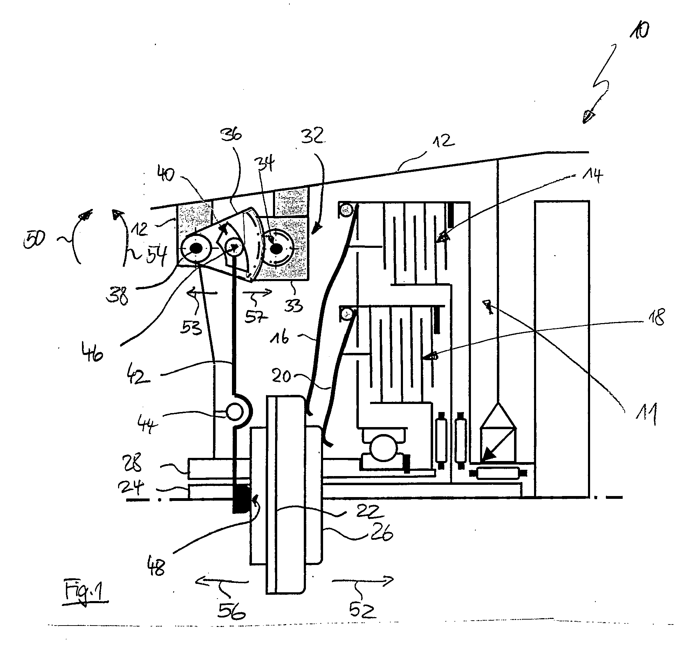

Fig. 1 zeigt einen Teilansicht eines Doppelkupplungsgetriebes 10, in welches die vorliegende Erfindung eingebaut ist. Das Doppelkupplungsgetriebe 10 weist ein Gehäuse 12 auf. Die vorliegende Erfindung ist jedoch nicht auf den Einbau in Doppelkupplungsgetriebe beschränkt. Die vorliegende Erfindung lässt sich auch in Einfachgetriebe bzw. -kupplungen einbauen. Ferner ist die vorliegende Erfindung zur Verwendung sowohl in nassen als auch trockenen Kupplungen geeignet.

Das Doppelkupplungsgetriebe 10 der Fig. 1 weist eine erste Kupplung 14 mit einer ersten Tellerfeder 16 auf. Ferner ist eine zweite Kupplung 18 mit einer zweiten Tellerfeder 20 vorgesehen. Die erste Kupplung 14 und die zweite Kupplung 18 stellen jeweils eine Trennkupplung 11 dar.

Mit der ersten Kupplung 14 wird ein Kupplungseinrücklager 20 betätigt. Das erste Kupplungseinrücklager 22 ist über die Tellerfeder 16 mit der ersten Kupplung 14 verbunden und wird durch die Tellerfeder 16 in einer Ausrückrichtung vorgespannt. Das erste Kupplungseinrücklager 22 ist koaxial zu einer ersten, inneren Antriebswelle 24 beweglich gelagert, so dass eine Bewegung in axialer Richtung der Welle 24 erfolgt.

Die zweite Kupplung 18 ist über die zweite Tellerfeder 20 mit einem zweiten Kupplungseinrücklager 26 verbunden, das auf einer zweiten, äußeren Antriebswelle 28 beweglich angeordnet ist. Die zweite Antriebswelle 28 ist koaxial zur ersten inneren Antriebswelle 24 angeordnet.

Das Doppelkupplungsgetriebe 10 der Fig. 1 weist ferner einen Stellmechanismus 30 gemäß der vorliegenden Erfindung auf. Der Stellmechanismus 30 umfasst einen Stellantrieb 32, ein Kurvensegment 36 und eine Kupplungselement, insbesondere eine Einrückgabel 42.

Der Stellantrieb 32 ist gehäusefest montiert und kann einen Motor 33, insbesondere einen Elektromotor, aufweisen. Eine Abtriebswelle des Motors 33 koppelt mit einem Ritzel 34. Das Ritzel 34 koppelt an das Kurvensegment 36, insbesondere über eine kämmende Verzahnung. Das Kurvensegment 36 ist drehbar an ein gehäusefestes erstes Lager 38 angelenkt. Die Drehachse des ersten Lagers 38 steht senkrecht auf der Zeichnungsebene der Fig. 1. Das Kurvensegment 36 weist eine kurvenförmige Ausnehmung 40 auf, die durchgehend dargestellt ist. Es versteht sich, dass alternativ auch eine Nut vorgesehen werden kann, je nach Ausgestaltung der Gabel 42 und deren Kurvenfolger 46. Auch eine invertierte Anordnung ist möglich. Die Einrückgabel 42 ist drehbar an einem gehäusefesten zweiten Lager bzw. Gegenlager 44 angelenkt und weist an einem ersten Ende den Kurvenfolger 46 auf. An einem gegenüberliegenden Ende berührt die Einrückgabel 42 im eingebauten Zustand einen Krafteinwirkungspunkt 48 des ersten Kupplungseinrücklagers 20.

Mit dem in der Fig. 1 gezeigten Stellmechanismus 30 wird die erste Kupplung 14 betätigt. Um die zweite Kupplung 18 zu betätigen, wird ein weiterer Stellmechanismus vorgesehen, der in der Darstellung der Fig. 1 nicht gezeigt ist.

Der gezeigte Stellmechanismus 30 befindet sich in einer Neutralstellung. Um die Einrücklager 22, 24 einzurücken, werden diese axial in Richtung (Einrückrichtung) eines Pfeils 52, in der Fig. 1 nach rechts, versetzt, indem das Kurvensegment 36 mittels des Stellantriebs 32 in einer Einrückdrehrichtung 50, hier im Uhrzeigersinn, gedreht wird. Der Kurvenfolger 46 folgt dann der Ausnehmung 40. Der Kurvenfolger bewegt sich bei einem Einrücken der Kupplung bezüglich des Kurvensegments 36 radial nach innen, d.h. der oberhalb des Gegenlagers 44 gelegene Teil der Gabel 42 bewegt sich in Richtung des Pfeils 53, wohin sich der unterhalb des Gegenlagers 44 gelegene Teil der Gabel 42 in Richtung des Pfeils 52 bewegt.

Bei umgekehrter Bewegungsrichtung wird die Kupplung ausgerückt. Dazu wird das Kurvensegment 36 in einer Ausrückdrehrichtung 54, hier gegen den Uhrzeigersinn, gedreht. Der untere Teil der Gabel 42 bewegt sich dann in einer Ausrückrichtung 56, hier nach links. Der obere Teil der Gabel 42 bewegt sich dann in Richtung des Pfeils 57, hier nach rechts. Diese Bewegung wird wiederum durch den Kurvenfolger 46 hervorgerufen, der sich in Bezug auf das Kurvensegment 36 radial nach außen bewegt, indem er der entsprechend geformten Ausnehmung 40 folgt.

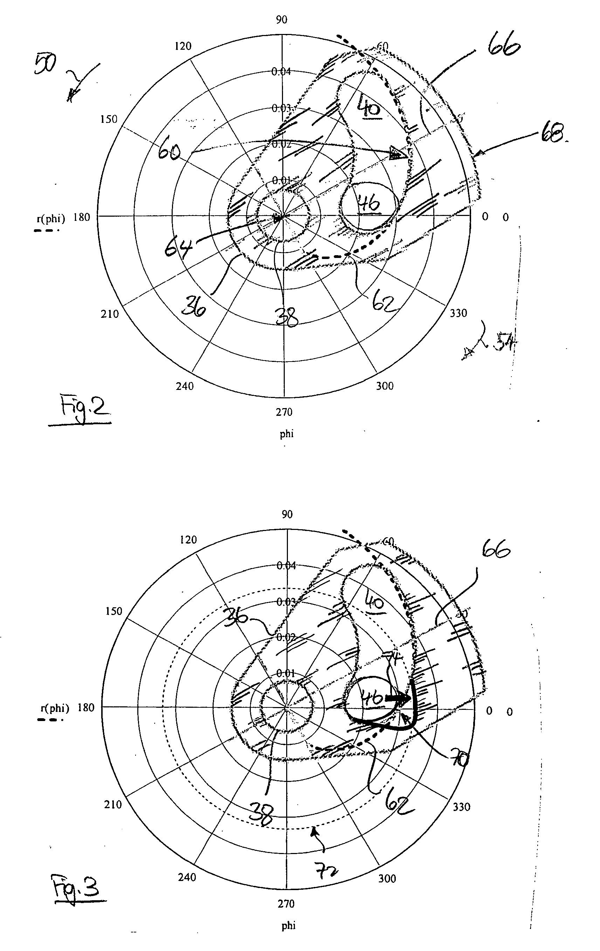

In Fig. 2 ist das Kurvensegment 36 der Fig. 1 isoliert gezeigt. Die Darstellung erfolgt in Zylinderkoordinaten, weshalb um die Kontur des Kurvensegments 36 ein Vollkreis gezeigt ist, der mit den Winkeln von 0 bis 330° beschriftet ist. Die Ausnehmung 40 ist im Vergleich zur Ausnehmung 40 der Fig. 1 derart verkippt, was sich darin äußert, dass die Einrückdrehrichtung 50 gegen den Uhrzeigersinn orientiert ist und dass die Ausrückdrehrichtung 54 im Uhrzeigersinn orientiert ist.

Die in der Fig. 2 rechts liegende Innenfläche der Ausnehmung 40 stellt eine sogenannte Kontaktflanke 60 dar. Der mit einer Strichlinie dargestellte Kurvenfolger 46 steht aufgrund der o.g. Vorspannung der Kupplungen durch die Tellerfedern 16, 20 mit der Kontaktflanke 60 in Berührung. Es versteht sich, dass bei umgekehrter Vorspannung, d.h. bei einer umgekehrten Orientierung der Einrückrichtung 52 und der Ausrückrichtung 56 aufgrund der Vorspannung der Tellerfedern 16, 20 die Kontaktfläche 60 auf der hier nicht näher bezeichneten gegenüberliegenden Flanke der Ausnehmung 40 liegen würde, die in der Fig. 2 radial innen liegt.

Die geometrische Größe der Ausnehmung 40 wird vorzugsweise so gewählt, dass sich der Kurvenfolger 46 mit einem vorgegebenen Spiel nicht in der Ausnehmung verhakt. Die Gabelrolle lässt sich nahezu reibungsfrei innerhalb der Ausnehmung 40 bewegen.

Die Kontaktflanke 60 weist im Querschnitt im Wesentlichen die Form einer Spiralkurve 62, insbesondere einer archimedischen Kurve, auf. Wenn die Kurve 62 eine archimedische Kurve ist, so kann dies ausgedrückt werden durch r(phi) = a • phi. Bildet man die Ableitung nach dem Winkel phi, so ergibt sich für die archimedische Kurve die Konstante "a", d.h. die Steigung der Kontaktflanke 60 ist bei Drehung des Kurvensegments 36 konstant. Die Einrückgabel 42, und somit auch die Einrücklager 22, 26, werden dann in axialer Richtung der Wellen 24, 28 kontinuierlich bewegt.

Das Kurvensegment 36 wird um eine Achse 64, die senkrecht auf der Zeichnungsebene der Fig. 2 steht, des gehäusefesten Lagers 38 gedreht. Am radial außen liegenden Rand des Kurvensegments 36 ist eine Verzahnung 68 gezeigt, wobei eine radiale Richtung durch eine Hilfslinie 66 angedeutet ist.

Die Fig. 2 zeigt eine Einrückstellung des Kurvensegments 36 bzw. des Kurvenfolgers 46. Der Kurvenfolger 46 ist aus seiner Normalstellung (vgl. Fig. 1) radial nach innen gewandert. Wird die Kupplung ausgerückt, so dreht man das Kurvensegment 36 ausgehend von der Stellung der Fig. 2 in der Ausrückdrehrichtung 54, d.h. mit dem Uhrzeigersinn, so dass der Kurvenfolger 46 radial nach außen wandert.

Fig. 3 zeigt eine Abwandlung des Kurvensegments 36 der Fig. 2, wobei die Einrückstellung beibehalten wurde.

Die Ausnehmung 40 bzw. die Kontaktflanke 60 weist im Bereich der eingerückten Stellung der Kupplung eine Ausnehmung 70 auf. Die Ausnehmung 70 bzw. deren Flanke folgt dabei einem Kreisbogen des Hilfskreises 72, d.h. der Radius verändert sich im Bereich der weiteren Ausnehmung 70 nicht.

Der Kurvenfolger 46, der hier noch immer in der Stellung der Fig. 2 gezeigt ist, kann aufgrund der Vorspannung der Kupplung 11 radial nach außen wandern, wie es durch einen Pfeil 74 angedeutet ist. Der Kurvenfolger 46 drückt nun derart auf die Kontaktflanke, so dass sich keine Reaktionskraft in tangentialer Richtung ergibt. Dadurch verringert sich die durch den Motor 33 aufzubringende Haltekraft, um die Kupplung 11 im eingerückten Zustand zu halten. Dabei wird davon ausgegangen, dass die Kupplung 11 in den in den Fig. 2 und 3 gezeigten Stellungen des Kurvenfolgers 46 bereits sicher eingerückt ist und somit einen sogenannten Einrückpunkt der Kontaktflanke 60 bereits sicher überschritten hat.

Durch die weitere Ausnehmung 70 wird also die Kraft verringert, die üblicherweise vom Stellantrieb 32 geliefert werden muss, um die Kupplung 11 im eingerückten Zustand zu halten, da sich das Einrücklager 22 bei der Ausgestaltung der Kontaktflanke 60 der Fig. 3 leicht in Ausrückrichtung 56 (vgl. Fig. 1) bewegen darf. Dies ermöglicht einen geringeren Energieverbrauch und insbesondere einen geringeren Treibstoffverbrauch, wenn der Stellantrieb 32 mittels Treibstoff des Kraftfahrzeugs mit Energie versorgt wird.

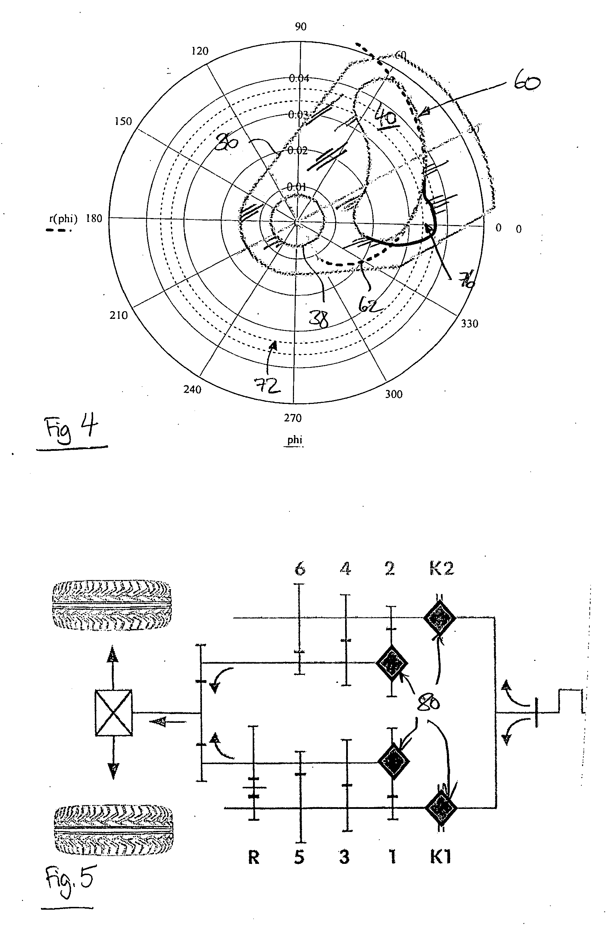

Fig. 4 zeigt eine weitere Ausgestaltung des Kurvensegments 36, wobei die Ausnehmung 40 im Vergleich zur Ausnehmung der Fig. 3 nochmals zusätzlich im Bereich des Einrückpunktes vergrößert wurde, wie es durch eine noch größere Ausbuchtung 76 angedeutet ist. Man erkennt deutlich im Vergleich zum Hilfskreis 72, dass die Form der Kontaktflanke 60 nochmals gegenüber dem Hilfskreis 72 radial nach außen versetzt wurde.

Bei einem Doppelkupplungsgetriebe, wie es exemplarisch in der Fig. 1 gezeigt ist, kann und muss das Kurvensegment 36 doppelt vorgesehen sein, um beide Kupplungen 14, 18 betätigen zu können. Weisen beide Ausnehmungen 40 die größere Auswölbung 76 auf, so ist es möglich, beide Kupplungen in diesen Stellungen einzurücken, um eine Parksperrfunktion realisieren zu können.

Eine Parksperrsituation ist in der Fig. 5 exemplarisch gezeigt. Mit Rauten 80 sind geschlossene Kupplungs- und Getriebeelemente verdeutlicht. Man erkennt in der Fig. 5 die beiden Getriebestränge des Doppelkupplungsgetriebes mit den entsprechend nummerierten Gängen 1 bis 6 und einem Rückwärtsgang R. Die doppelt vorgesehenen Kupplungen 14 und 18 sind jeweils geschlossen. Ferner sind hier exemplarisch die Gänge 1 und 2 , d.h. jeweils ein Gang eines Getriebestrangs, eingelegt. In diesem Zustand können sich die Antriebsräder nicht bewegen, da die Beaufschlagung eines oder beider Getriebestränge mit einem Drehmoment in einer Verspannung des Gesamtgetriebes resultieren würde. Auf diese Weise lässt sich die Parksperrfunktion realisieren. Entsprechendes gilt für Einfachkupplungen, wenn man lediglich einen Gang einlegt.

Die in Fig. 4 gezeigte größere Auswölbung 76 der Ausnehmung 40 des Kurvensegments 36 gewährleistet, dass der in der Fig. 4 nicht dargestellte Kurvenfolger 46 nicht ohne weiteres auf seiner Parksperrstellung herausgeführt werden kann.

Aus Sicherheitsgründen kann es erforderlich sein, dass die im Zusammenhang mit den Fig. 4 und 5 erläuterte Parksperrfunktion auch manuell entriegelbar sein muss. Exemplarisch denke man an eine Situation, wenn ein Kraftfahrzeug abgestellt, d.h. geparkt, wurde und anschließend wegbewegt werden muss, wobei der Stellantrieb die erforderliche Kraft nicht bzw. nicht mehr liefert, z.B. wegen eines Stromausfalls bzw. eines Ausfall des Bordnetzes.

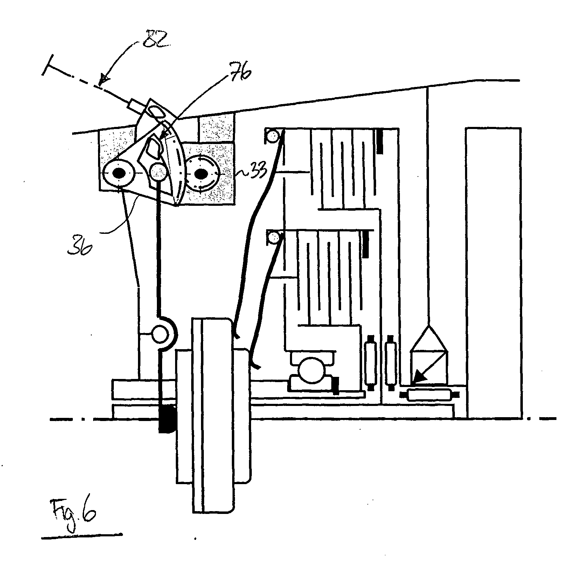

Zu diesem Zweck kann ein in Fig. 6 vorgesehener Bowdenzug 82 eingesetzt werden, der mit dem Kurvensegment 36 verbunden ist und von außerhalb des Getriebegehäuses 12 betätigbar ist. Es sei bemerkt, dass die Fig. 6 wiederum das Kurvensegment 36 der Fig. 1 mit einer weiteren Auswölbung 76 zeigt, wobei die Ausnehmung 40 wiederum von links oben nach rechts unten und nicht wie im Zusammenhang mit den Fig. 2 bis 4 von rechts oben nach links unten verläuft. Ferner sei angemerkt, dass die Ausnehmung 40 im Wesentlichen in Umfangsrichtung des Kurvensegments verläuft.

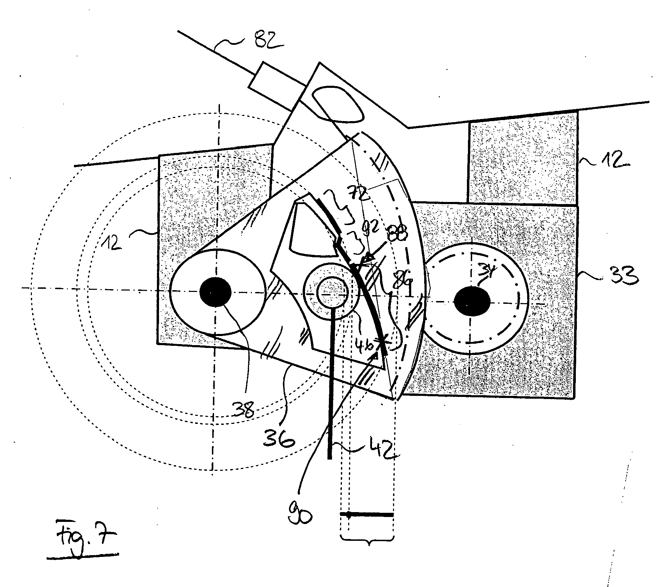

Bezug nehmend auf Fig. 7 ist das Kurvensegment 36 der Fig. 6 vergrößert dargestellt.

Die Fig. 7 dient insbesondere zur Verdeutlichung verschiedener Abschnitte der Kontaktflanke 60. Die Kontaktflanke 60 setzt sich aus einem Betriebsabschnitt 86, hier einem Arretier- bzw. Verriegelungsbereich 76 und einer dazwischen angeordneten Flanke 92 mit entsprechender Erhöhung zusammen. Der Betriebsabschnitt 86 weist an seinem in der Fig. 7 oberen Ende den Einrückpunkt 88 und an seinem unteren Ende den Ausrückpunkt 90 auf. Wird das Kurvensegment 36 in der Einrückdrehrichtung 50 überdreht, so ist eine leichte radiale Erhöhung im Flankenabschnitt 92 zu überwinden, um in den Arretierbereich 76 zu gelangen. Die Anpresskraft ist dort größer als zum vollständigen Schließen der Kupplung erforderlich. Es versteht sich, dass sich die Kurvenformen der Fig. 2 bis 4 miteinander kombinieren lassen, um mehrere Funktionen zu implementieren.

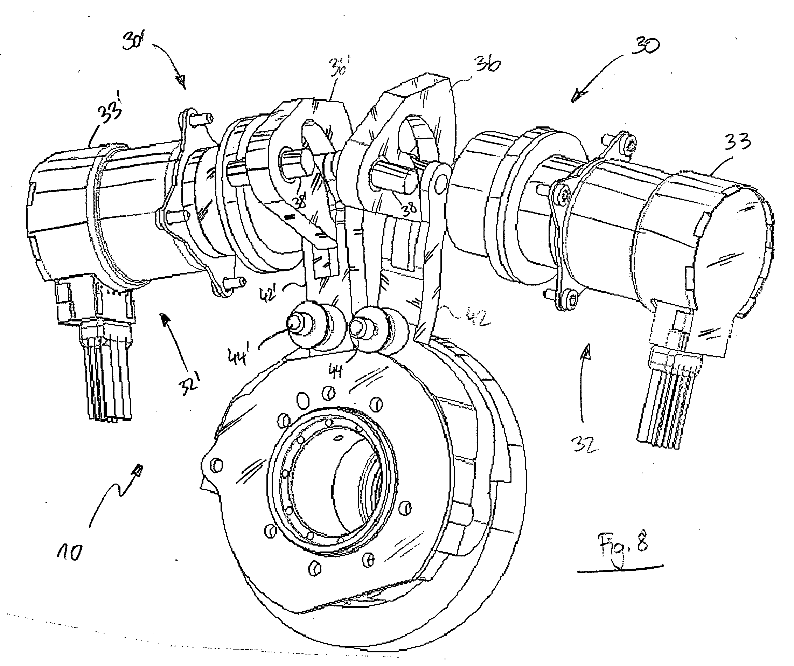

Die Figur 8 zeigt eine perspektivische Ansicht eines Teils des in der Fig. 1 gezeigten Doppelkupplungsgetriebes 10. Das doppelte Vorsehen des Stellmechanismus 30, 30' gemäß der vorliegenden Erfindung ist deutlich zu erkennen. Gleiches gilt für die Kurvensegmente 36, 36', die Einrückgabeln 42, 42', die ersten Lager 38, 38' sowie die zweiten Lager 44, 44'.

In der Fig. 8 ist die kompakte Bauweise des Stellmechanismus bei der Doppelkupplungsanwendung 10 gut zu erkennen. Die Stellantriebe 32, 32' bauen bezüglich der hier nicht dargestellten Antriebswellen 24, 28 in radialer bzw. tangentialer Richtung kurz. Die Achsen der Antriebe 32, 32' können flexibel zueinander angeordnet werden und bilden in Fig. 8 einen Winkel von ca. 160° zueinander. Winkel zwischen 150° und 160° sind bevorzugt.

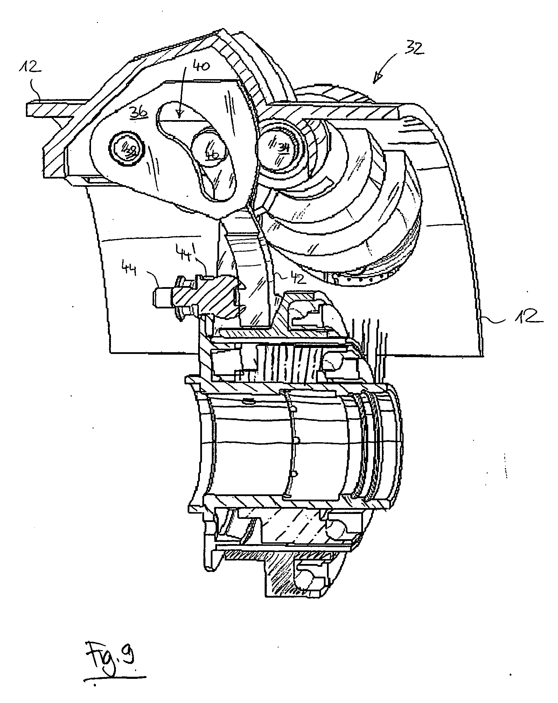

Fig. 9 zeigt eine perspektivische, geschnittene Ansicht durch die Mittelebene der Fig. 8, wo die beiden Stellmechanismen 30, 30' aneinander grenzen. Auch hier ist deutlich zu erkennen, dass der Stellantrieb 32 gut in das zusätzlich dargestellte Gehäuse 12 integriert ist. Der Stellmechanismus 30 gemäß der vorliegenden Erfindung baut sehr kompakt, was einem Einsatz bei Getrieben zugute kommt, die bei Inline-Anwendungen oder Front-Quer-Getrieben eingesetzt werden. Ein derartig ausgestaltetes Getriebe lässt sich gut und einfach in die meistens recht begrenzten Getriebetunnel von Kraftfahrzeugen integrieren.

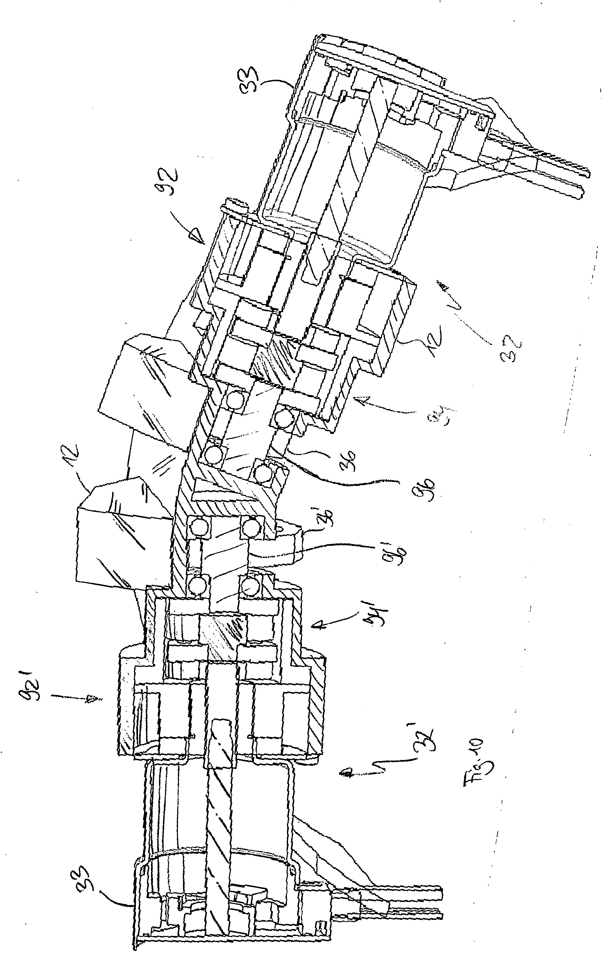

Fig. 10 zeigt eine weitere Schnittdarstellung durch die Stellantriebe 32, 32' der Fig. 8, wobei auch hier zusätzlich das Getriebegehäuse 12 dargestellt ist, um die kompakte Bauweise zu verdeutlichen.

Die Stellantriebe 32 weisen hier jeweils einen Motor 33, insbesondere einen Elektromotor, eine daran koppelnde Bremse 92 und ein an die Bremse 92 koppelndes Zwischengetriebe 94 (z.B. Planetengetriebe, Stirnradgetriebe, etc.) auf. Die Zwischengetriebe treiben Ritzel 96 an, die vorzugsweise verzahnt ausgebildet sind. Damit kämmt der Ritzel 96 mit dem Kurvensegment 36.

Auch in der Darstellung der Fig. 10 ist gut zu erkennen, dass die Komponenten des erfindungsgemäßen Stellmechanismus nur unwesentlich aus dem ansonsten herkömmlich ausgestalteten Gehäuse 12 hervorstehen.

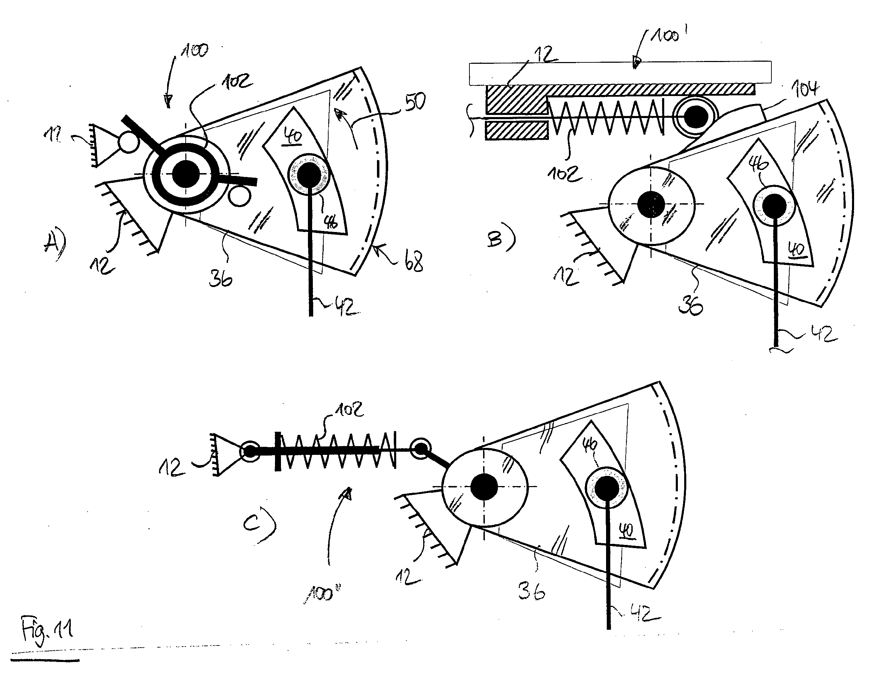

Bezug nehmend auf die Fig. 11a bis 11c sind drei Varianten einer zusätzlichen Kraftkompensationseinrichtung 100, 100' und 100" gezeigt, die jeweils am Kurvensegment 36 ankoppeln.

Jede der Kraftkompensationseinrichtungen umfasst ein Federelement 102, das mit einem seiner Enden an das Kurvensegment 36 koppelt. Bei den Varianten der Fig. 11a und 11c ist das andere Ende des Federelements 102 am Gehäuse 12 fixiert. Bei der Variante der Fig. 11b weist das Gehäuse 12 eine Öffnung auf, so dass das andere Ende des Federelements 102 auch außerhalb des Gehäuses 12 fixiert werden kann.

Die Federelemente 102 sind bei den Varianten der Fig. 11a bis 11c derart vorgespannt, dass eine Drehbewegung des Kurvensegments 36 in der Einrückdrehrichtung 50 (hier gegen den Uhrzeigersinn) unterstützt wird. Somit ist gewährleistet, dass die von dem Motor 33 aufzuwendende Kraft, um eine Kupplung einzurücken, kleiner als ohne Kraftkompensationseinrichtung 100 ist.

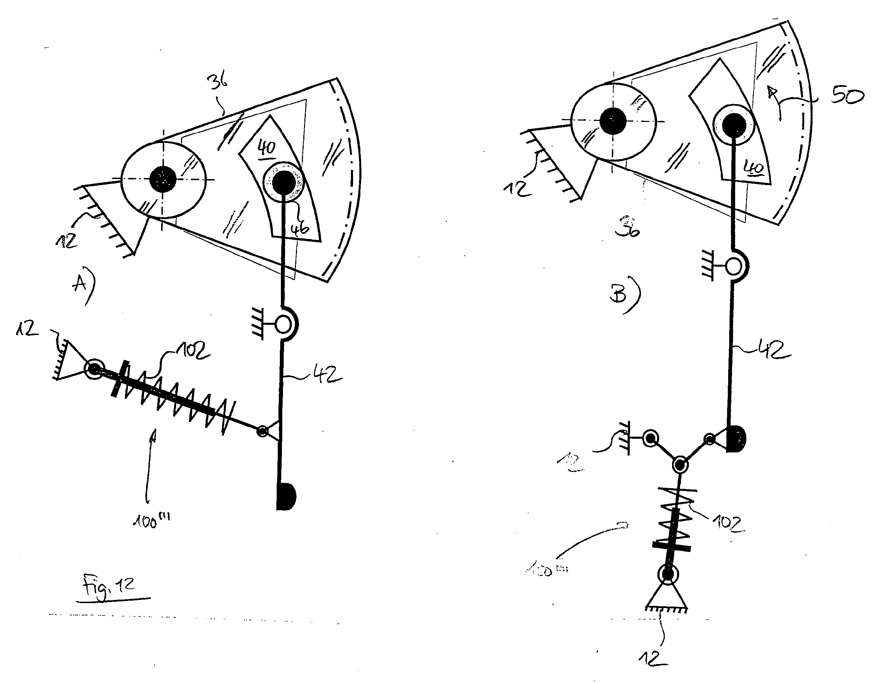

Die Fig. 12a und 12b zeigen zwei weitere Varianten einer Kraftkompensationseinrichtung 103' und 104'. Die Kraftkompensationseinrichtungen 103' und 104' greifen an die Einrückgabel 42, insbesondere an deren unteren Teil, an.

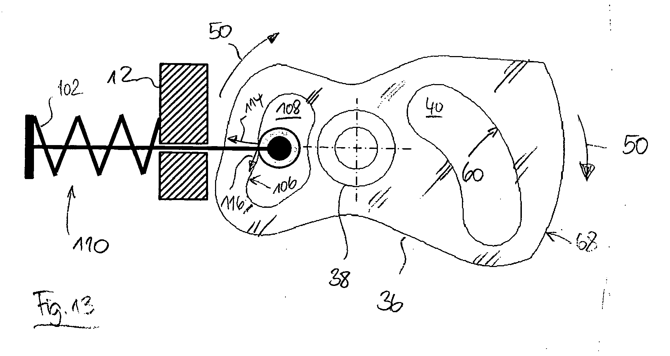

Fig. 13 zeigt eine weitere Ausgestaltung eines Kurvensegments 36 mit integrierter Kraftkompensationskurve 106, die hier eine radial außen liegende Flanke einer weiteren Ausnehmung 108 im verlängerten Körper des Kurvensegments 36 darstellt.

Das Kurvensegment 36 weist einen zusätzlichen Flügel gegenüber den bisher erläuterten Kurvensegmenten 36 auf, wobei der zusätzliche Flügel, der die Ausnehmung 108 umfasst, den Körper der bisherigen Kurvensegmente 36 gegenüberliegt.

Die Kraftkompensationseinrichtung ist hier mit 110 bezeichnet und ähnlich zu der Kraftkompensationseinrichtung 100' der Fig. 11b ausgestaltet, d.h. durch eine Öffnung im Gehäuse 12 geführt. Die Druckfeder 102 ist zwischen einem Zuganker 112 und dem Gehäuse 102 vorgespannt. Es sei jedoch bereits hier erwähnt, dass der Zuganker 112 nicht unbedingt durch eine Öffnung im Gehäuse 12 geführt werden muss, sondern z.B. auch mit Hilfe von Rollen fixiert werden kann, die gehäusefest gelagert sind.

Die Kraftkompensationskurve 106 ist ähnlich der Kontaktflanke 60 gestaltet. Sie lässt sich jedoch auch anders gestalten. Durch die Linearführung des Zugankers ist eine Krafteinwirkungsrichtung vorgegeben. Die auf die Kraftkompensationskurve 106 wirkende Kraft lässt sich also in eine Radialkomponente 114 und eine in Umfangsrichtung verlaufende Komponente 116 zerlegen. Die Umfangskomponente 116 unterstützt den Stellantrieb bei einer Drehbewegung des Kurvensegments 36 in der Einrückdrehrichtung 50.

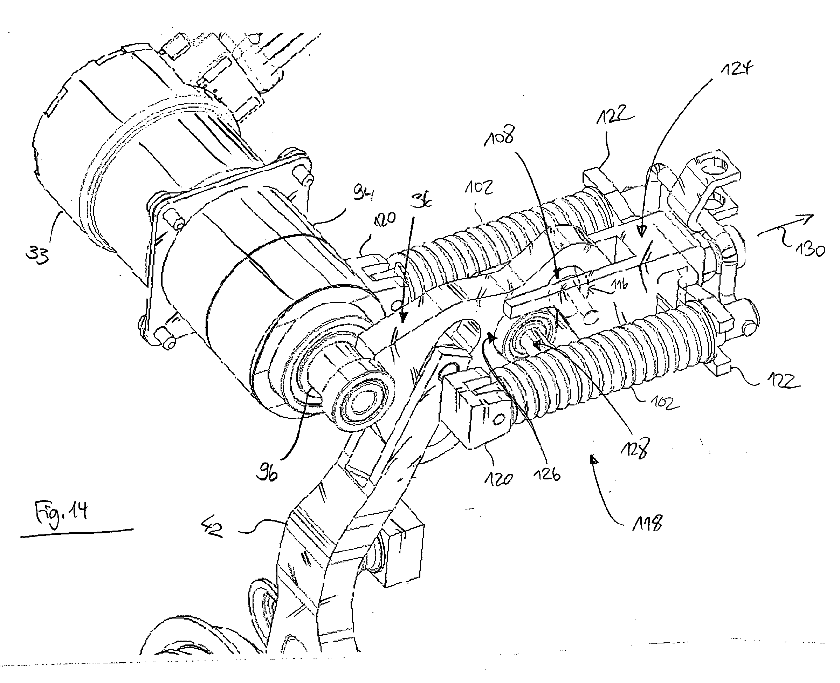

In Fig. 14 ist eine weitere Ausgestaltung einer Kraftkompensationseinrichtung 118 gezeigt, die mit einem Kurvensegment 36 ähnlich dem der Fig. 13 zusammenwirkt. Das Kurvensegment 36 der Fig. 14 weist ebenfalls eine zusätzliche Ausnehmung 108 mit einer entsprechenden Kraftkompensationskurve 116 auf. Die Kraftkompensationseinricltung 118 umfasst zwei Druckfedern 102, die jeweils zwischen einer gehäusefesten Lagerstelle 120 und einem Zughalter 122 eingespannt sind. Die Zughalter 122 sind mit einem Zuganker 124 verbunden, der über eine beidseits des Kurvensegments 36 vorgesehene Lagerrolle 126 abgestützt wird, die auf einem gehäusefesten Bolzen 128 läuft. Die Kraftkompensationseinrichtung 118 bewirkt eine im Wesentlichen radial nach außen gerichtete Kraft 130.

## Patentansprüche

1. Stellmechanismus (30) zum Ein- und Ausrücken einer Trennkupplung (11) eines Einfach- oder Mehrfachkupplungsgetriebes (10), welches ein Gehäuse (12) aufweist, für ein Kraftfahrzeug, mit:
einem Stellantrieb (30);
einem Kurvensegment (36), das eine kurvenförmige Ausnehmung (40) aufweist, das um erstes gehäusefestes Lager (38) drehbar ist und das durch den Stellantrieb (30) in eine Einrückdrehrichtung (50) oder eine Ausrückdrehrichtung (54) drehbar ist;
einer Einrückgabel (42), die um ein zweites gehäusefestes Lager (44) drehbar ist, die auf einer Seite der Gabel (42) über einen Kurvenfolger (46) an das Kurvensegment (36) gekoppelt ist und die auf einer gegenüberliegenden Seite der Gabel (42) derart an die Trennkupplung (11) koppelbar ist, dass die Trennkupplung (11) bei einer Drehung des Kurvensegments (36) in die Einrückdrehrichtung (50) geschlossen wird und dass die Trennkupplung (11) bei einer Drehung des Kurvensegments (36) in die Ausrückdrehrichtung (54) geöffnet wird;
wobei der Kurvenfolger (46) in die kurvenförmige Ausnehmung (40) eingreift und von einer Kontur der kurvenförmigen Ausnehmung (40) bei Drehung des Kurvensegments (36) geführt wird; **dadurch gekennzeichnet, dass**
die Kontur derart geformt ist, dass der Kurvenfolger (46) bei einer Betätigung des Stellantriebs (32) in einer radialen Richtung des Kurvensegments (36) versetzt wird.

2. Stellmechanismus nach Anspruch 1, wobei die Ausnehmung (40) im Wesentlichen in einer Umfangsrichtung des Kurvensegments (36) verläuft und einen sich ändernden Radius (66) aufweist.

3. Stellmechanismus nach Anspruch 1 oder 2, wobei die Ausnehmung (40) eine Kontaktflanke (60) aufweist, die der Kurvenfolger (46) in einem eingebauten Zustand des Stellmechanismus (30) aufgrund einer Vorspannung der Trennkupplung (11), die entlang einer Ausrückrichtung (56) der Trennkupplung (11) wirkt, stets berührt.

4. Stellmechanismus (30) nach Anspruch 3, wobei die Kontaktflanke (60) im Wesentlichen einen Querschnitt in Form eines Ausschnitts einer, insbesondere archimedischen, Spirale (62) aufweist.

5. Stellmechanismus nach Anspruch 3 oder 4, wobei die Kontaktflanke (60) einen kontinuierlichen Betriebsabschnitt (86) aufweist, wobei der Betriebsabschnitt (86) an seinem einen Ende einen Einrückpunkt (88) und an seinem anderen Ende einen Ausrückpunkt (90) aufweist.

6. Stellmechanismus nach Anspruch 5, wobei die Kontaktflanke (60) im Bereich des Einrückpunktes (88) eine Ausbuchtung aufweist, die vorzugsweise einen konstanten Radius hat.

7. Stellmechanismus nach Anspruch 5 oder 6, wobei sich in der Ausrückdrehrichtung (54) ein Flankenabschnitt (92) mit Erhebung an den Betriebsabschnitt (86) anschließt, wobei der Flankenabschnitt (92) mit Erhebung anschließend in einen Verriegelungsabschnitt (76) übergeht, der vorzugsweise einen konstanten Radius hat.

8. Stellmechanismus nach einem der vorhergehenden Ansprüche, der ferner eine Kraftkompensationseinrichtung (100; 118) aufweist, die eine Komponente des Stellmechanismus, vorzugsweise an das Kurvensegment (36) oder die Gabel (42), gekoppelt ist und die eine Drehung des Kurvensegments (36) in der Einrückdrehrichtung (50) unterstützt.

9. Stellmechanismus nach Anspruch 8, wobei die Kraftkompensationseinrichtung (100) ein Federelement (102) aufweist, das gegen die Ausrückdrehrichtung (54) vorgespannt ist und an einem Ende an das Gehäuse (12) und an dem gegenüber liegenden Ende an das Kurvensegment (36) oder die Gabel (42) koppelbar ist.

10. Stellmechanismus nach Anspruch 9, wobei, wenn das Federelement (102) an das Kurvensegment (36) gekoppelt ist, das Kurvensegment (36) an seiner Außenfläche, wo das Federelement (102) ankoppelt, eine ansteigende Erhöhung (104) aufweist, um eine größtmögliche Kraft im Bereich des Einrückpunkts (88) auf das Kurvensegment (36) bei einer Drehung in die Einrückdrehrichtung (50) auszuüben.

11. Stellmechanismus nach einem der vorhergehenden Ansprüche, wobei der Kurvenfolger (46) eine Gabelrolle ist, die vorzugsweise zwischen zwei Zinken der Gabel (42) drehbar fixiert ist und deren Durchmesser so gewählt ist, dass die Gabelrolle (46) mit einem vorgegebenen Spiel entlang der Kontaktflanke (60) in der kurvenförmigen Ausnehmung (40) bewegt werden kann.

12. Stellmechanismus nach einem der vorhergehenden Ansprüche, wobei der Stellantrieb (32) einen Motor (33), insbesondere einen Elektromotor, und eine Bremse (92) aufweist.

13. Stellmechanismus nach Anspruch 12, wobei der Stellantrieb ferner ein Zwischengetriebe, insbesondere ein Planeten- oder Stirnradgetriebe, und ein Ritzel, insbesondere mit einem umlaufenden Zahnkranz, aufweist.

14. Stellmechanismus nach Anspruch 13, wobei die Bremse parallel zum Zwischengetriebe über eine Stirnverzahnung angeordnet ist.

15. Stellmechanismus nach einem der vorhergehenden Ansprüche, wobei das Kurvensegment ein Kreissegment ist, dessen Kreisbogen eine Verzahnung aufweist.

## Claims

1. Actuating mechanism (30) for engaging and disengaging a separating clutch (11) of a single-clutch or multiple-clutch transmission (10), which has a housing (12), for a motor vehicle, having:
an actuating drive (32);
a cam segment (36) which has a curved recess (40) and which is rotatable about a first bearing (38), said first bearing (38) being fixed with respect to the housing, and which can be rotated by the actuating drive (32) in an engagement rotational direction (50) or a disengagement rotational direction (54);
an engagement fork (42) which is rotatable about a second bearing (44), said second bearing (44) being fixed with respect to the housing, and which is coupled at one side of the fork (42) to the cam segment (36) by means of a cam follower (46) and which can be coupled on an opposite side of the fork (42) to the separating clutch (11) in such a way that the separating clutch (11) is closed in the event of a rotation of the cam segment (36) in the engagement rotational direction (50) and the separating clutch (11) is opened in the event of a rotation of the cam segment (36) in the disengagement rotational direction (54);
with the cam follower (46) engaging into the curved recess (40) and being guided by a contour of the curved recess (40) in the event of a rotation of the cam segment (36); **characterized in that**
the contour is shaped such that the cam follower (46) is offset in a radial direction of the cam segment (36) in the event of an actuation of the actuating drive (32).

2. Actuating mechanism according to Claim 1, with the recess (40) running substantially in a circumferential direction of the cam segment (36) and having a varying radius (66).

3. Actuating mechanism according to Claim 1 or 2, with the recess (40) having a contact flank (60) which, in an installed state of the actuating mechanism (30), is in contact with the cam follower (46) at all times on account of a preload of the separating clutch (11), which preload acts in a disengagement direction (56) of the separating clutch (11).

4. Actuating mechanism (30) according to Claim 3, with the contact flank (60) substantially having a cross section in the shape of a section of an, in particular Archimedes, spiral (62).

5. Actuating mechanism according to Claim 3 or 4, with the contact flank (60) having a continuous operating section (86), with the operating section (86) having, at its one end, an engagement point (88) and, at its other end, a disengagement point (90).

6. Actuating mechanism according to Claim 5, with the contact flank (60) having, in the region of the engagement point (88), a convexity which preferably has a constant radius.

7. Actuating mechanism according to Claim 5 or 6, with a flank section (92) with an elevation adjoining the operating section (86) in the disengagement direction (54), with the flank section (92) with an elevation subsequently merging into a locking section (76) which preferably has a constant radius.

8. Actuating mechanism according to one of the preceding claims, which actuating mechanism also has a force compensation device (100; 118) which couples to a component of the actuating mechanism, preferably to the cam segment (36) or to the fork (42), and which assists a rotation of the cam segment (36) in the engagement rotational direction (50).

9. Actuating mechanism according to Claim 8, with the force compensation device (100) having a spring element (102) which is preloaded counter to the disengagement rotational direction (54) and which can be coupled at one end to the housing (12) and at the opposite end to the cam segment (36) or to the fork (42).

10. Actuating mechanism according to Claim 9, wherein, when the spring element (102) is coupled to the cam segment (36), the cam segment (36) has, on its outer surface where the spring element (102) is coupled on, a rising elevation (104) in order to exert the greatest possible force on the cam segment (36) in the region of the engagement point (88) in the event of a rotation in the engagement rotational direction (50).

11. Actuating mechanism according to one of the preceding claims, with the cam follower (46) being a fork roller which is preferably rotatably fixed between two prongs of the fork (42) and whose diameter is selected such that the fork roller (46) can be moved with a predefined degree of play along the contact flank (60) in the curved recess (40).

12. Actuating mechanism according to one of the preceding claims, with the actuating drive (32) having a motor (33), in particular an electric motor, and a brake (92).

13. Actuating mechanism according to Claim 12, with the actuating drive also having an intermediate gearing, in particular a planetary gear set or spur gear mechanism, and a pinion, in particular with an encircling toothed ring.

14. Actuating mechanism according to Claim 13, with the brake being arranged in parallel with respect to the intermediate gearing by means of a spur toothing.

15. Actuating mechanism according to one of the preceding claims, with the cam segment being a circular segment whose circular arc has a toothing.

## Revendications

1. Mécanisme de réglage (30) destiné à l'insertion et à l'extraction d'un embrayage de coupure (11) d'une boîte de vitesse à embrayage simple ou multiple (10), comportant un carter (12), pour un véhicule automobile, avec :
un entraînement de réglage (30) ;
un segment de came (36) comportant un évidement (40) en forme de came pouvant être tourné autour d'un premier palier (38) fixé au carter et pouvant être tourné par l'entraînement de réglage (30) dans un sens de rotation d'insertion (50) ou dans un sens de rotation d'extraction (54) ;
une fourche d'insertion (42) pouvant tourner autour d'un deuxième palier (44) fixé au carter, ladite fourche étant couplée, sur un côté de la fourche (42), au segment de came (36) via un suiveur de came (46) et pouvant être couplée, sur un côté opposé de la fourche (42),
à l'embrayage de coupure (11) de telle sorte que l'embrayage de coupure (11) est fermé en présence d'une rotation du segment de came (36) dans le sens de rotation d'insertion (50) et que l'embrayage de coupure (11) est ouvert en présence d'une rotation du segment de came (36) dans le sens de rotation d'extraction (54) ;
le suiveur de came (46) s'engrenant dans l'évidement (40) en forme de came et étant guidé par un contour de l'évidement (40) en forme de came en cas de rotation du segment de came (36) ;
**caractérisé en ce que** le contour est formé de telle sorte que le suiveur de came (46) est décalé en cas d'actionnement de l'entraînement de réglage (32) dans une direction radiale du segment de came (36).

2. Mécanisme de réglage selon la revendication 1, l'évidement (40) s'étendant pour l'essentiel dans une direction périphérique du segment de came (36) et comportant un rayon (66) variable.

3. Mécanisme de réglage selon la revendication 1 ou 2, l'évidement (40) comportant un flanc de contact (60) touchant en continu le suiveur de came (46) à l'état inséré du mécanisme de réglage (30) du fait d'une précontrainte de l'embrayage de coupure (11) agissant le long d'un sens d'extraction (56) de l'embrayage de coupure (11).

4. Mécanisme de réglage (30) selon la revendication 3, le flanc de contact (60) comportant pour l'essentiel une section transversale en forme de détouré, notamment de spirale (62) d'Archimède.

5. Mécanisme de réglage selon la revendication 3 ou 4, le flanc de contact (60) présentant une section d'entraînement (86) continue, la section d'entraînement (86) présentant un point d'insertion (88) au niveau de sa première extrémité et un point d'extraction (90) au niveau de son autre extrémité.

6. Mécanisme de réglage selon la revendication 5, le flanc de contact (60) comportant, dans la zone du point d'insertion (88), un bombement ayant de préférence un rayon constant.

7. Mécanisme de réglage selon la revendication 5 ou 6, une section de flanc (92) dotée d'une éminence étant accolée, dans le sens de rotation d'extraction (54), à la section d'entraînement (86), la section de flanc (92) dotée d'une éminente se transformant ensuite en une section de verrouillage (76) ayant de préférence un rayon constant.

8. Mécanisme de réglage selon l'une quelconque des revendications précédentes, comportant en outre un dispositif de compensation de force (100 ; 118) couplé à un composant du mécanisme de réglage, de préférence au segment de came (36) ou à la fourche (42), et soutenant une rotation du segment de came (36) dans le sens de rotation d'insertion (50).

9. Mécanisme de réglage selon la revendication 8, le dispositif de compensation de force (100) présentant un élément de ressort (102) précontraint contre le sens de rotation d'extraction (54) et pouvant être couplé au carter (12) au niveau d'une extrémité et au segment de came (36) ou à la fourche (42) au niveau de l'extrémité opposée.

10. Mécanisme de réglage selon la revendication 9, sachant que lorsque l'élément de ressort (102) est couplé au segment de came (36), le segment de came (36) présente au niveau de sa surface extérieure, à l'endroit de l'accouplement avec l'élément de ressort (102), un rehaussement (104) incliné vers le haut permettant d'exercer une force croissante sur le segment de came (36), dans la zone du point d'insertion (88), en présence d'une rotation dans le sens de rotation d'insertion (50).

11. Mécanisme de réglage selon l'une quelconque des revendications précédentes, le suiveur de came (46) étant un rouleau de fourche fixé de préférence entre deux biseaux de la fourche (42) de façon à pouvoir être pivoté et dont le diamètre est sélectionné de telle sorte que le rouleau de fourche (46) peut être déplacé avec un jeu prédéfini dans un évidement (40) en forme de came, le long du flanc de contact (60).

12. Mécanisme de réglage selon l'une quelconque des revendications précédentes, l'entraînement de réglage (32) comportant un moteur (33), notamment un moteur électrique, et un frein (92).

13. Mécanisme de réglage selon la revendication 12, l'entraînement de réglage comportant en outre un engrenage intermédiaire, notamment un engrenage planétaire ou un engrenage à pignons, et un petit pignon, notamment doté d'une couronne dentée périphérique.

14. Mécanisme de réglage selon la revendication 13, le frein étant disposé parallèlement à l'engrenage intermédiaire par le biais d'un endentement avant.

15. Mécanisme de réglage selon l'une quelconque des revendications précédentes, le segment de came étant un segment circulaire donc l'arc de cercle comporte un endentement.
